# EUROPÄISCHE PATENTSCHRIFT

(11) **EP 1 211 179 B1**
(45) Veröffentlichungstag und Bekanntmachung des Hinweises auf die Patenterteilung: **04.02.2004**
(21) Anmeldenummer: 01127213.5
(22) Anmeldetag: 16.11.2001
(51) Int. Cl.: B65B 61/26, B65B 51/16, B29C 65/00

(54) **Durchlaufsiegelgerät**
Sealing device
Dispositif de scellement

(30) Priorität: 21.11.2000 DE 20019799 U
(43) Veröffentlichungstag der Anmeldung: 05.06.2002
(73) Patentinhaber: Wolf, Hans, D-74821 Mosbach (DE)
(72) Erfinder: Wolf, Hans, 74821 Mosbach (DE); Wolf, Christian, 74821 Mosbach (DE)
(74) Vertreter: Wolf, Günter, Dipl.-Ing.

(56) Entgegenhaltungen:
- DE-U- 8 711 367

## Beschreibung

Die Erfindung betrifft ein Durchlaufsiegelgerät zum Schweißversiegeln der Öffnungsränder insbesondere von mit Sterilgut gefüllten Verpackungsbeuteln aus verschweißbarer Kunststofffolie, bestehend aus einem in einer Durchlaufführung des Gerätes angeordneten Schweißwerkzeug zur Erfassung der Öffnungsränder und aus einem Drucker zur Beschriftung der zu versiegelnden oder versiegelten Öffnungsränder der Verpackungsbeutel.

Durchlaufsiegelgeräte dieser Art sind bspw. bekannt nach der DE-A-296 10 976 U1, welches darin beschriebene Gerät jedoch noch nicht mit einem Drucker zum Bedrucken der zu versiegelnden oder versiegelten Öffnungsränder ausgestattet ist, wie dies bei anspruchsvolleren Geräten dieser Art ebenfalls bekannt und üblich ist (siehe bspw. DE-A-33 20 288 A1). Ein weiteres Durchlaufsiegelgerät nach dem Oberbegriff des Anspruchs 1 ist bekannt nach der DE 87 11 367.8 U1.
Bei diesen Geräten handelt es sich insofern um Halbautomaten, als dabei die gefüllten und zu versiegelnden Beutel von Hand in die seitlich offene Durchlaufführung eingelegt und eingeschoben werden, in der dann unter Passage einer Folienvorheizung der Weitertransport mittels zweier Endlostransporte zwischen zwei Siegelrollen erfolgt, die die beiden Siegelränder miteinander versiegeln, wonach dann durch den anschließend angeordneten Drucker das Bedrucken des Siegelrandes bspw. mit inhaltsspezifischen Daten erfolgt. Mit solchen Geräten können selbstverständlich Beutel mit unterschiedlicher Breite verarbeitet werden.

Bei Wechsel des Beutelformates, der sich in der Regel auch auf die Beutelbreite und damit die Siegelrandlänge der zu verschließenden Öffnungsränder auswirkt, kann dies dazu führen, daß bei zu kurzer Siegelrandlänge die gesamte Beschriftungslänge nicht aufgenommen werden kann, und das eine oder andere Ende oder beide Enden der Beschriftung gewissermaßen ins Leere gedruckt werden.

Der Erfindung liegt somit die Aufgabe zugrunde, ein Gerät der eingangs genannten Art mit einfachen Mitteln dahingehend zu verbessern, daß die aufzubringende Beschriftung immer auf dem Siegelrand Platz findet.

Diese Aufgabe ist mit einem Durchlaufsiegelgerät der gattungsgemäßen Art nach der Erfindung dadurch gelöst, daß das Schweißgerät vor dem Drucker mit Mitteln zur Erfassung der Beutelbreite ausgestattet und diese Mittel mit dem Drucker verschaltet sind, der in Abhängigkeit von der erfaßten Beutelbreite auf unterschiedlich groß zu druckende Beschriftungen einstellbar ist.

Hierbei wird der Drucker also nicht so manipuliert bzw. eingestellt, daß die Schriftzeichen und/oder Zahlen bspw. unter Beibehaltung ihrer Größe auf die tatsächlich verfügbare Länge des Siegelrandes zusammengedrängt werden, sondern die Beschriftung wird einfach mit entsprechender Vergrößerung oder Verkleinerung auf dem Siegelrand bei optimaler Ausnutzung der verfügbaren Siegelrandfläche aufgedruckt. Dies zu leisten sind moderne Drucker ohne weiteres in der Lage, wenn sie nur den Befehl erhalten, in welcher Größe sie die Beschriftung bzw. einen vorgegebenen Schriftzug ausdrucken sollen. Im vorliegenden Fall wird dieser Befehl bzw. dieses Signal von den die Breite des Beutels abtastenden Mitteln geliefert, die dann, ent sprechend umgesetzt, den Drucker bzgl. der von ihm zu drukkenden Beschriftungsgröße steuern.

Das Ganze hat natürlich auch den Vorteil, daß sich dies automatisch vollzieht, d.h., der Benutzer eines solchen Gerätes hat bei Wechsel des Beutelformates nicht mehr darauf zu achten, ob das Druckformat umgestellt werden muß oder nicht.

Als Mittel zur Breitenabtastung der Beutel kommen bevorzugt photo-elektrische Sensoren in Betracht, da diese im Gegensatz bspw. zu Mikroschaltern mit Fühlern ohne Direktkontakt mit den Beuteln direkt umsetzbare Signale zur Druckersteuerung im oben angegebenen Sinne liefern. Sofern hier von mindestens einem Sensor die Rede ist, heißt das, das dieser eine Sensor sowohl den Einlauf des Beutelvorderrandes als auch den Durchlauf des Beutelhinterrandes registriertr und beide Signale via einer entsprechenden Umsetzelektronik an den Drucker weitergegeben werden.

Die Maßgabe der Anordnung der "Mittel vor dem Drucker" ist im übrigen so zu verstehen, daß diese nicht nur im Zuge der Durchlaufführung angeordnet ein können, sondern auch unmittelbar vor dem Drucker. Letzteres würde allerdings eine Verlängerung des Gerätes um die maximal verarbeitbare Beutelbreite bedeuten, die zwar möglich aber unzweckmäßig wäre, d.h. die Anordnung der Mittel zur Beutelbreitenermittlung wird bevorzugt am Beginn oder im Zuge der Durchlaufführung vorgesehen.

Das erfindungsgemäße Durchlaufsiegelgerät wird nachfolgend anhand der zeichnerischen Darstellung eines Ausführungsbeispieles näher erläutert.

Es zeigt
- Fig.1: perspektivisch ein Ausführungsbeispiel eines DurchlaufSiegelgerätes und
- Fig.2: schematisch und im Schnitt das Durchlaufsiegelgerät gemäß Fig.1 mit einem Einselsensor und nachgeordnetem Drucker.

Das Durchlaufsiegelgerät zum Schweißversiegeln der Öffnungsränder R von bspw. mit Sterilgut, wie Einwegspritzen, chirurgischen Besteckteilen od.dgl., gefüllten Verpackungsbeuteln VB aus verschweißbarer Kunststofffolie, besteht aus einem in einer Durchlaufführung 1 des Gerätes angeordneten Schweißwerkzeug 2 zur Erfassung der Öffnungsränder R und aus einem Drucker 3 zur Beschriftung der zu versiegelnden oder versiegelten Öffnungsränder R des Verpackungsbeutels VB.

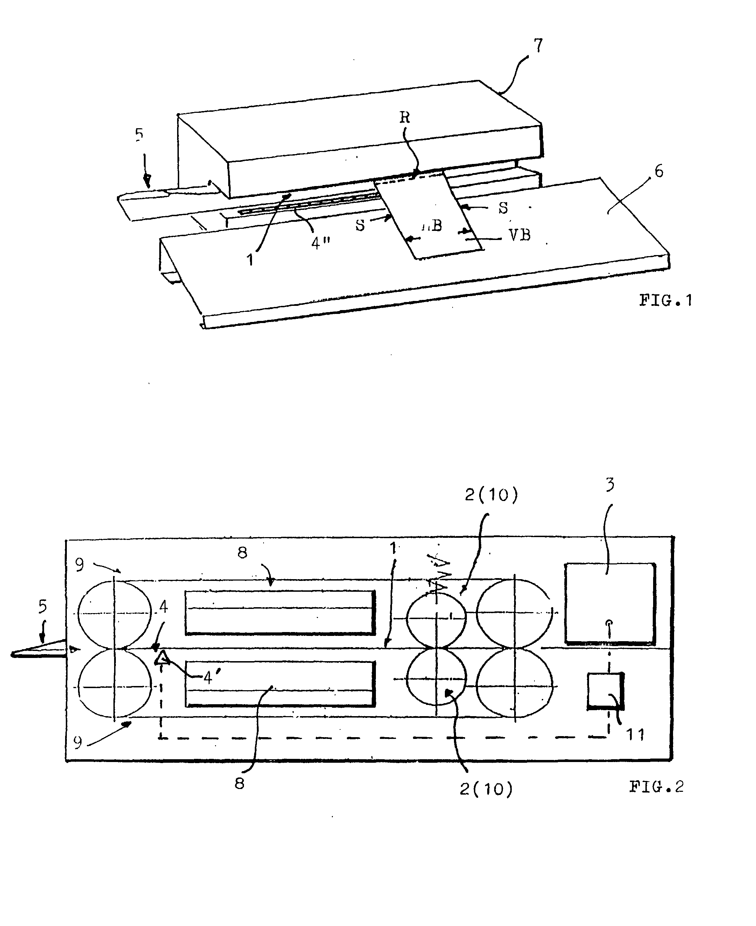

Unter Verweis auf Fig.2 werden dabei die gefüllten und zu versiegelnden Beutel VB von Hand in die seitlich offene Durchlaufführung 1 eingelegt und eingeschoben, in der dann unter Passage einer Folienvorheizung 8 der Weitertransport mittels zweier Endlostransporte 9 zwischen zwei Siegelrollen 10 erfolgt, die die beiden Siegelränder miteinander versiegeln, wonach dann durch den anschließend im Gerätegehäuse 7 mit angeordneten Drucker 3 das Bedrucken des Siegelrandes bspw. mit inhaltsspezifischen Daten erfolgt.

Für ein solches Gerät ist nun erfindungsgemäß wesentlich, daß das Schweißgerät vor dem Drucker 3 mit Mitteln 4 zur Erfassung der Beutelbreite ausgestattet und diese Mittel 4 mit dem Drucker 3 verschaltet sind, der in Abhängigkeit von der erfaßten Beutelbreite auf unterschiedlich groß zu druckende Beschriftungen einstellbar ist.

Wie in Fig.2 mit verdeutlich, sind die Mittel 4 zur Erfassung der Beutelbreite B aus mindestens einem im Zuge der Durchlaufführung 1 angeordneten Sensor 4' gebildet, der vorzugsweise ein photo-elektrischer Sensor und der ferner unmittelbar hinter dem Einführbereich 5 der Durchlaufführung 1 angeordnet ist. Zwischen Sensor 4' und Drucker 3 ist eine entsprechende Umsetzelektronik 11 eingeschaltet, mit der die Fördergeschwindigkeit der Endlosförderer 9 berücksichtigt wird, um daraus die Breite des Beutels VB abzuleiten. Dieses umgesetzte Breitensignal liefert dann den Druckerbefehl dafür, mit welcher Vergrößerung oder Verkleinerung der Drucker die vorgegebene Beschriftung zu drucken hat.

Statt eines solchen Einzelsensors 4', der ja nur die beiden durchlaufenden Seitenränder S des Beutels VB erfaßt, können die Mittel 4 zur Erfassung der Beutelbreite B auch aus einem im Bereich der Durchlaufführung 1 angeordneten Zeilensensor 4" gebildet sein, wie er in Fig.1 mit angedeutet ist. Hierzu bedarf es keiner Berücksichtigung der Durchlaufgeschwindigkeit, sondern es ist lediglich die Anzahl der im Zeilensensor 4" enthaltenen Einzelsensoren vom Umsetzer 11 zu erfassen bzw. umzusetzen, die vom durchlaufenden Beutel abgedeckt werden.

Mit 6 ist der Vollständigkeit halber eine dem Gehäuse 7 bzw. der Durchlaufführung 1 vorgesetzte Auflage- und Führungsfläche bezeichnet und dargestellt, wie sie bei solchen Geräten üblich ist.

## Patentansprüche

1. Durchlaufsiegelgerät zum Schweißversiegeln der Öffnungsränder (R) von mit Sterilgut gefüllten Verpackungsbeuteln (VB) aus verschweißbarer Kunststofffolie, bestehend aus einem in einer Durchlaufführung (1) des Gerätes angeordneten Schweißwerkzeug (2) zur Erfassung der Öffnungsränder (R) und aus einem Drucker (3) zur Beschriftung der zu versiegelnden oder versiegelten Öffnungsränder (R) des Verpackungsbeutels (VB),
**dadurch gekennzeichnet,**
**daß** das Schweißgerät vor dem Drucker (3) mit Mitteln (4) zur Erfassung der Beutelbreite ausgestattet und diese Mittel (4) mit dem Drucker (3) verschaltet sind, der in Abhängigkeit von der erfaßten Beutelbreite auf unterschiedlich groß zu druckende Beschriftungen einstellbar ist.

2. Gerät nach Anspruch 1,
**dadurch gekennzeichnet,**
**daß** die Mittel (4) zur Erfassung der Beutelbreite aus mindestens einem im Zuge der Durchlaufführung (1) angeordnetem Sensor (4') gebildet sind.

3. Gerät nach Anspruch 1 oder 2,
**dadurch gekennzeichnet,**
**daß** der mindestens eine Sensor (4') ein photo-elektrischer Sensor ist.

4. Gerät nach Anspruch 3,
**dadurch gekennzeichnet,**
**daß** der Sensor (4') unmittelbar hinter dem Einführbereich der Durchlaufführung (1) angeordnet ist.

5. Gerät nach Anspruch 1,
**dadurch gekennzeichnet,**
**daß** die Mittel (4) zur Erfassung der Beutelbreite aus einem im Bereich der Durchlaufführung (1) angeordneten Zeilensensor (4") gebildet sind.

## Claims

1. A flow-type sealing device for heat-sealing the opening edges ( R ) of packing bags (VB) of weldable plastic foil, loaded with sterile goods, comprising a welding tool (2) for determining the opening edges ( R ), which is disposed in a through-flow guideway (1) of the device, and a printer (3) for printing labels on the opening edges ( R ) of the packing bag (VB) sealed or to be sealed, **characterized in that**
the welding tool ahead of the printer (3) is furnished with means (4) for determining the bag width, and that the said means (4) are electrically connected to the printer (3) which in response to the determined bag width is adjustable to differently sized characters to be printed.

2. A device according to claim 1,
**characterized in that**
the means (4) for determining the bag width are formed of no less than one sensor (4') arranged within the through-flow guideway (1).

3. A device according to claims 1 or 2,
**characterized in that**
the at least one sensor (4') is a photo-electric sensor.

4. A device according to claim 3,
**characterized in that**
the sensor (4') is arranged directly behind the incoming zone of the through-flow guideway (1).

5. A device according to claim 1,
**characterized in that**
the means (4) for detecting the bag width are formed of a line sensor (4") disposed in the zone of the through-flow guideway (1).

## Revendications

1. Appareil de scellement continu pour le scellement par soudage des bords d'ouverture (R) de sachets d'emballage (VB) en feuille plastique pouvant être soudée remplis de matières stériles, constitué par un outil de soudage (2) placé dans un guidage continu (1) de l'appareil pour détecter les bords d'ouverture (R) et par une imprimante (3) pour imprimer sur les bords d'ouverture (R) à sceller ou scellés du sachet d'emballage (VB),
**caractérisé en ce**
**que** l'outil de soudage est équipé avant l'imprimante (3) de moyens (4) pour détecter la largeur du sachet et que ces moyens (4) sont connectés avec l'imprimante (3) qui est réglable sur des marquages à imprimer de différentes grandeurs en fonction de la largeur de sachet détectée.

2. Appareil selon la revendication 1,
**caractérisé en ce**
**que** les moyens (4) pour détecter la largeur de sachet sont formés par au moins un capteur (4') placé au cours du guidage continu (1).

3. Appareil selon la revendication 1 ou 2,
**caractérisé en ce**
**que** le capteur qui existe au moins (4') est un capteur photoélectrique.

4. Appareil selon la revendication 3,
**caractérisé en ce**
**que** le capteur (4') est placé directement derrière la zone d'introduction du guidage continu (1).

5. Appareil selon la revendication 1,
**caractérisé en ce**
**que** les moyens (4) pour détecter la largeur du sachet sont formés par un détecteur de lignes (4") placé dans la zone du guidage continu (1).
